# EUROPÄISCHE PATENTSCHRIFT

(11) **EP 1 625 813 B1**
(45) Veröffentlichungstag und Bekanntmachung des Hinweises auf die Patenterteilung: **19.03.2008**
(21) Anmeldenummer: 04019356.7
(22) Anmeldetag: 14.08.2004
(51) Int. Cl.: A47J 31/24, A47J 31/46

(54) **Brühvorrichtung für einen Kaffeeautomaten**
Brewing device for a coffee machine
Dispositif d'infusion de café pour une machine à café

(43) Veröffentlichungstag der Anmeldung: 15.02.2006
(73) Patentinhaber: Melitta France SAS, 75010 Paris (FR)
(72) Erfinder: Ruckstuhl, Stephan, 4623 Neuendorf (CH)
(74) Vertreter: Dantz, Jan Henning

(56) Entgegenhaltungen:
- CH-A- 668 543
- GB-A- 971 767
- US-A- 5 302 407
- US-A- 6 035 762

## Beschreibung

Die vorliegende Erfindung betrifft eine Brühvorrichtung für einen Kaffeeautomaten, insbesondere für den Haushaltsbereich, mit einem eine Brühkammer umgebenden Gehäuse, an dessen einer Seite eine Brause und einer gegenüberliegenden Seite ein Boden mit einem Abfluss für das gebrühte Fluid angeordnet ist, wobei zwischen Brause und Gehäuse ein Dichtelement vorgesehen ist.

Es gibt Kaffeeautomaten, bei denen eine Brühvorrichtung vorgesehen ist, in die ein oder mehrere Portionspackungen mit Kaffee einlegbar sind. Hierfür weist die Brühkammer einen Halter auf, der von dem Kaffeeautomaten herausnehmbar ist, damit eine entsprechende Portionspackung eingelegt werden kann. Anschließend wird die Portionspackung in die Brühvorrichtung eingelegt und ein Deckel verschlossen, der über einen Dichtring eine Abdichtung einer Brühkammer erreicht. Nachteilig bei dieser Form der Abdichtung ist, dass der Dichtring einem relativ hohen Verschleiß unterliegt und zudem ein Anpressdruck des Dichtringes nur über die mechanischen Mittel des Gehäuses erreicht wird. Nach einiger Zeit kann es daher zu Undichtigkeiten kommen und der Dichtring muss ausgewechselt werden. Ferner lassen sich mit einer solchen Konstruktion nur begrenzt ein höherer Druck in der Brühkammer aufbauen. Schließlich besteht noch der Nachteil, dass beim Brühen von Kaffee das Kaffeepulver etwas zusammenfällt und somit das in die Brühkammer eingeleitete Fluid an der Portionspackung durch gebildete Spalte vorbeiströmen kann (By-pass Effekt), ohne das eine Extraktion erfolgt.

Aus der US 5,302,407 ist eine Brühvorrichtung für einen Kaffeeautomaten bekannt, bei dem benachbart zu einer Brühkammer ein Kolbenelement bewegbar ausgestaltet ist. Das Kolbenelement umfasst am Umfang eine Nut, in der ein 0-Ring als Dichtelement angeordnet ist. Der Kolben bildet eine Anlagefläche aus, eine mit Kaffeepulver gefüllte Brühkammer begrenzt.

Ferner ist in der US 6,035,762 eine Espressomaschine offenbart, bei der in einer Brühkammer eine Filterkapsel angeordnet ist. Die Brühkammer ist beidseitig durch Platten begrenzt, in denen Öffnungen zum Durchleiten eines Fluides ausgespart sind. Die Platten sind dabei an einem Halter montiert, der an seinem Umfang eine Nut mit einem Dichtring aufweist. Dadurch kann der Halter zusammen mit den Platten in einem Gehäuse bewegt werden, wobei die Platten ihre Form beibehalten.

Es ist daher Aufgabe der vorliegenden Erfindung eine Brühvorrichtung für einen Kaffeeautomaten zu schaffen, die eine zuverlässige Abdichtung gewährleistet und eine gewisse Volumenanpassung der Brühkammer ermöglicht.

Diese Aufgabe wird mit einer Brühvorrichtung mit den Merkmalen des Anspruches 1 gelöst.

Erfindungsgemäß ist das Dichtelement zu dem Gehäuse und der Brühkammer hin bewegbar an der Brause gehalten. Dadurch lässt sich die Brühkammer auf einfache Weise abdichten, da die Anforderungen an die Maßgenauigkeit der Positionierung des Gehäuses relativ zu der Brause gering gehalten werden können. Gewisse Toleranzabweichungen können durch die Bewegung des Dichtelementes ausgeglichen werden, das dann bei einer Bewegung zu dem Gehäuse eine umlaufende Dichtfläche ausbilden kann. Dadurch lässt sich auch das Gehäuse einfach und ohne großen Kraftaufwand von dem Dichtelement und der Brause abnehmen, um die Brühkammer zu entleeren bzw. zu Befüllen. Ferner kann mittels des Dichtelementes und einem entsprechenden Druckelement ein gewisser Volumenausgleich stattfinden, wenn in der Brühkammer während des Brühvorganges das Extraktionsgut leicht zusammenfällt, da das Dichtelement über die Bewegung zur Brühkammer hin das Volumen der Brühkammer reduzieren kann. Dadurch wird der oben beschriebene By-pass Effekt durch die Bildung von Spalten vermieden.

Dabei ist nach der Erfindung das flexible Dichtelement mit einer äußeren Dichtfläche an dem Gehäuse zur Abdichtung anlegbar und mit einem inneren elastischen Teil zu der Brühkammer bewegbar. Das Dichtelement kann somit ring- oder kreisförmig jedoch auch in jeder anderen beliebigen Form ausgebildet sein und einen äußeren eher fest liegenden Abschnitt aufweisen, der für eine Abdichtung mit dem Gehäuse sorgt, und mit einem inneren Abschnitt durch eine Elastizität einen Volumenausgleich vornehmen kann. Hierfür ist das Dichtelement vorzugsweise auf der der Brühkammer abgewandten Seite mit Druck beaufschlagbar, sodass kein Antrieb zur Bewegung des Dichtelementes erforderlich ist.

Nachdem bei einer Brühvorrichtung meist eine Pumpe zur Zuleitung des Fluides vorgesehen ist, erfolgt die Bewegung des Dichtelementes vorzugsweise hydraulisch und es ist eine Verbindung mit einem Entlastungsventil zwischen einer Zuleitung für die Brause und einem Druckraum für das Dichtelement vorhanden. Dadurch kann der mit der Pumpe erzeugte Druck ausgenutzt werden, um das Dichtelement an das Gehäuse bzw. in Richtung der Brühkammer zu bewegen. Eine Abdichtung des Gehäuses mit hohem Anpressdruck der Dichtung erfolgt dann nur im Bedarfsfall für den Brühvorgang und auch die Bewegung des Dichtelementes im Übrigen ist auf den Brühvorgang beschränkt. Außerhalb des Brühvorgangs bleibt das Entlastungsventil offen und die Dichtung wird nicht mit Druck beaufschlagt. Während des Brühvorgangs wird jedoch die Zuleitung zur Brause mit einem vorgespannten Ventil verschlossen, so dass zunächst ein Druck in einem Druckraum für das Dichtelement aufgebaut werden, damit sich dieses dichtend an das Gehäuse anlegt und zu der Brühkammer hin bewegt. Erst bei Überschreiten eines gewissen Druckes wird dann das Ventil geöffnet und das Fluid kann in die Brühkammer strömen, wobei zu diesem Zeitpunkt schon eine Abdichtung durch das Dichtelement gewährleistet wird und das Extraktionsgut durch das Dichtelement leicht komprimiert sein kann.

Um das Extraktionsgut innerhalb der Brühkammer möglichst gleichmäßig zusammenzudrücken, kann an dem Dichtelement ein Druckelement angeordnet oder ausgebildet sein, das während des Brühvorganges sich zu oder in die Brühkammer hinein bewegt. Das Druckelement kann dabei dieselbe Querschnittsform wie die Brühkammer besitzen, um eine gleichmäßige Flächenpressung zu ermöglichen. Dabei kann das Druckelement bei separater Ausbildung über ein oder mehrere Zapfen an dem Dichtelement ausgerichtet sein.

Gemäß einer weiteren Ausgestaltung der Brühvorrichtung sind in der Brühkammer ein oder mehrere Portionspackungen mit Kaffee aufnehmbar, die mit einem Anpressdruck zwischen dem Boden mit dem Abfluss und dem Druckelement gehalten sind. Für einen definierten Druck innerhalb der Brühkammer kann der Abfluss mit einem vorgespannten Verschlussventil versehen sein, das sich erst bei Überschreiten eines bestimmten Druckes öffnet.

Die Brause kann eine feststehende Düse umfassen, durch die ein Fluid in die Brühkammer strömt. Dadurch kann die Zuführung von Fluid konstruktiv einfach ausgebildet sein, wobei die Düse von dem flexiblen Dichtelement umgeben ist.

Die Erfindung wird nachfolgend anhand eines Ausführungsbeispieles mit Bezug auf die beigefügten Zeichnungen näher erläutert. Es zeigen:
- Figur 1: eine geschnittene Seitenansicht eines Kaffeeautomaten mit einer erfindungsgemäßen Brühvorrichtung;
- Figur 2: eine geschnittene Detailansicht der Brühvorrichtung der Figur 1;
- Figur 3: eine Draufsicht auf die Brause der Brühkammer der Figur 2, und
- Figur 4: eine Draufsicht auf den Boden der Brühkammer der Figur 2.

Ein Kaffeeautomat 1 umfasst einen Vorratsbehälter 2 für Frischwasser, an dem ein Auslassventil 3 vorgesehen ist, das über eine Leitung 4 mit einer Pumpe 5 verbunden ist. Mittels der Pumpe 5 lässt sich das Wasser zu einer Heizplatte 6 führen, in der spiralförmige Durchgänge 7 ausgebildet sind, in denen das Wasser erhitzt werden kann. Benachbart ist eine Platte 8 vorgesehen, die Teil einer Brause bildet und in der eine Zuleitung 30 für das erhitzte Wasser vorgesehen ist. An der Platte 8 ist eine Halterung 9 für ein Dichtelement 20' montiert, das im Wesentlichen ringförmig ausgebildet ist und in dem mittig eine Düse 11' vorgesehen ist. Über die Düse 11' kann das erhitzte Wasser in eine Brühkammer 19 einströmen, die von einem Gehäuse 10 umgeben ist. Auf der gegenüberliegenden Seite der Düse 11' ist ein Boden 12 zur Begrenzung der Brühkammer 19 vorgesehen, in dem ein Abfluss ausgebildet ist, sodass das gebrühte Fluid durch einen trichterförmigen Auslass 13 zu einem Ausleger 14 strömt, an dem eine Auslassöffnung 15 zur Befüllung von Kaffeetassen vorgesehen ist.

Der Kaffeeautomat 1 umfasst eine Brühkammer 19, in der ein oder mehrere Portionspackungen mit Kaffee einfügbar sind. Hierfür ist eine zylindrische Abdeckung 16 vorgesehen, an der ein Griff 17 ausgebildet ist, über den das Gehäuse 10 über eine Betätigungsmechanik von der Brause gelöst und verschwenkt werden kann, sodass die Brühkammer 19 von oben befüllt wird. Anschließend wird die Abdeckung 16 verschlossen und das Gehäuse 10 in die gezeigte Position bewegt. Nach dem Brühvorgang werden dann die Portionspackungen in einen Sammelbehälter 18 entleert, um die Brühkammer 19 erneut zu befüllen. Für die vorliegende Anmeldung können jedoch völlig unterschiedliche Betätigungsmechaniken verwendet werden, um die Brühvorrichtung mit ein oder mehreren Portionspackungen zu befüllen.

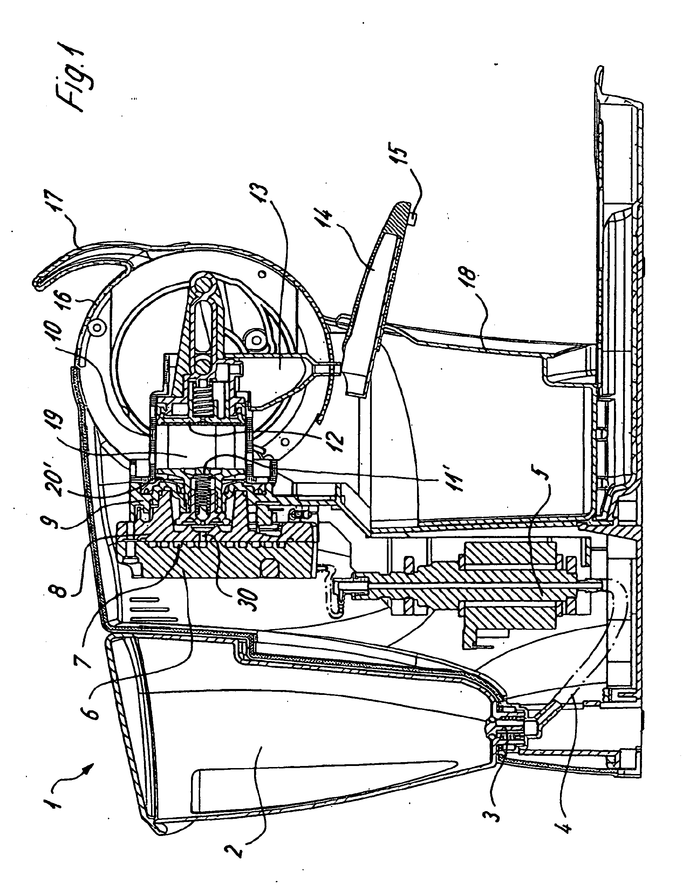

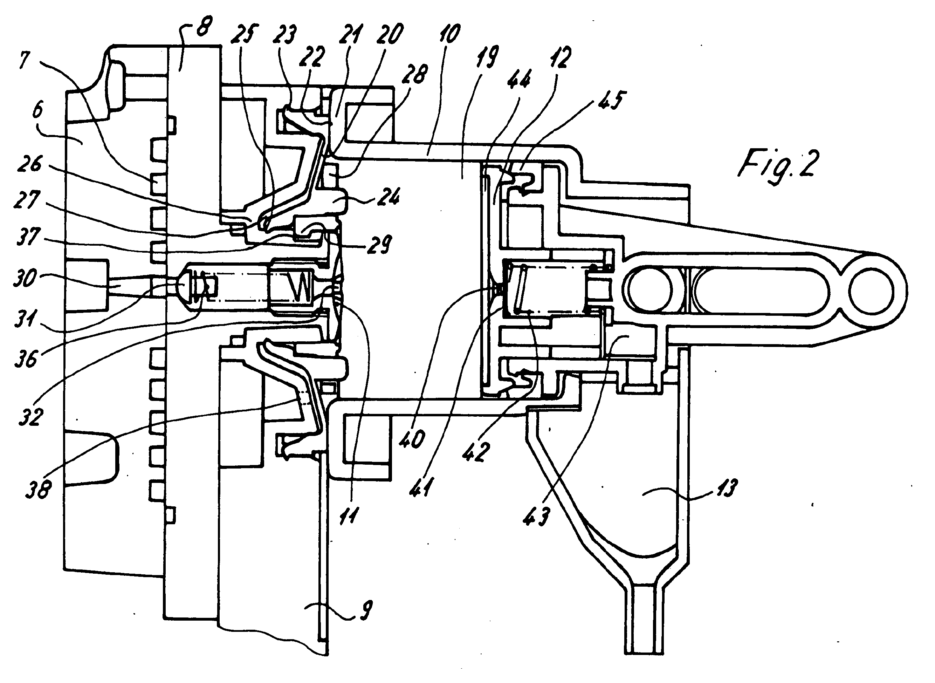

In Figur 2 ist die Brühvorrichtung des Kaffeeautomaten 1 vergrößert dargestellt, wobei gegenüber Figur 1 eine kleine Modifikation der Düse 11 und des Dichtelementes 20 vorgesehen ist.

Das Dichtelement 20 ist ringförmig ausgebildet und besitzt einen äußeren Abschnitt, an dem Dichtlippen 22 ausgebildet sind, die an einem radial nach außen hervorstehenden Flansch 21 des Gehäuses 10 anliegen. An dem äußeren Abschnitt der Dichtung 20 ist ferner eine Dichtfläche 23 ausgebildet, die für eine Abdichtung zwischen dem Halter 9 und der Dichtung 20 sorgt. An einem inneren Abschnitt der Dichtung 20 ist eine weitere Dichtlippe 25 zur Ausbildung einer Dichtfläche vorgesehen, die an einem ringförmigen Abschnitt 26 des Halters 9 anliegt. Der Halter 9 ist dabei mit einer ringförmigen Wand versehen, die ähnlich der Geometrie der Dichtung 20 ausgebildet ist. Zwischen der Wand des Halters 9 und der Dichtung 20 ist somit ein Druckraum 27 ausgebildet, der außen von der Dichtfläche 23 und innen von der Dichtfläche 25 begrenzt ist und über eine Zuleitung 38 mit Druck beaufschlagbar ist. Die Zuleitung 38 steht in Verbindung mit der Zuleitung 30 zum Zuführen des erhitzten Wassers in die Brühkammer 19.

Auf der zur Brühkammer 19 gewandten Seite des Dichtelementes 20 ist ein plattenförmiges Druckelement 28 angeordnet, das durch zwei an dem Dichtelement 20 ausgebildete Zapfen 24 ausgerichtet und fixiert ist. Das Druckelement 28 weist eine innere Aussparung auf, in der die feststehende Düse 11 aufgenommen ist. Das

Druckelement 28 weist dabei einen Vorsprung 29 auf, der maximal zwischen der Düse 11 und einem Anschlag 37 an dem Halter 9 bewegbar ist. Das Druckelement 28 ist in diesem Bereich verschiebbar angeordnet und kann entsprechend in die Brühkammer 19 hinein bewegt werden.

Nach der Erhitzung des Fluides kann dieses durch eine Zuleitung 30 strömen, die durch ein vorgespanntes Ventil 31 verschlossen ist. Hierfür ist eine Feder 36 zwischen dem Ventilkörper 31 und der Düse 11 angeordnet. Die Düse 11 ist an einem hülsenförmigen Vorsprung der Platte 8 verschraubt und weist eine in die Brühkammer 19 mündende Öffnung 32 auf.

Auf der gegenüberliegenden Seite der Düse 11 ist ein Boden 12 an der Brühkammer 19 vorgesehen, der mehrere Rippen 44 und einen mittigen Abfluss 40 aufweist. Der Abfluss 40 ist über einen Ventilkörper 41 verschlossen, der über eine Feder 42 in die geschlossene Position vorgespannt ist. Dadurch ist gewährleistet, dass innerhalb der Brühkammer 19 erst bei Überschreiten eines gewissen Druckes das Fluid über einen Ausströmkanal 43 abgeführt werden kann.

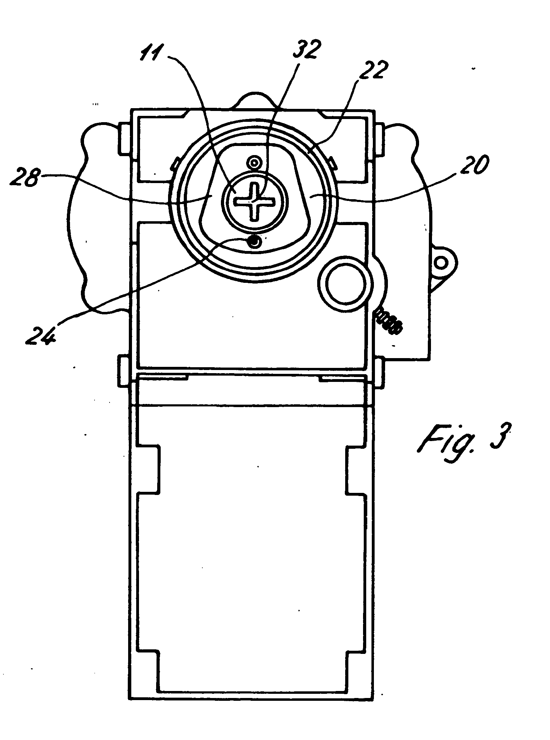

In Figur 3 ist die Düse 11 in Draufsicht gezeigt, aus der die kreuzförmige Auslassöffnung 32 ersichtlich ist. Die Düse 11 ist innerhalb des Druckelementes 28 aufgenommen, das über Zapfen 24 zentriert gehalten ist. Das Druckelement 28 weist eine dem Querschnitt der Brühkammer 19 entsprechende Form auf. Die Dichtlippen 22 sind kreisförmig ausgebildet und liegen an dem Gehäuse 10 an.

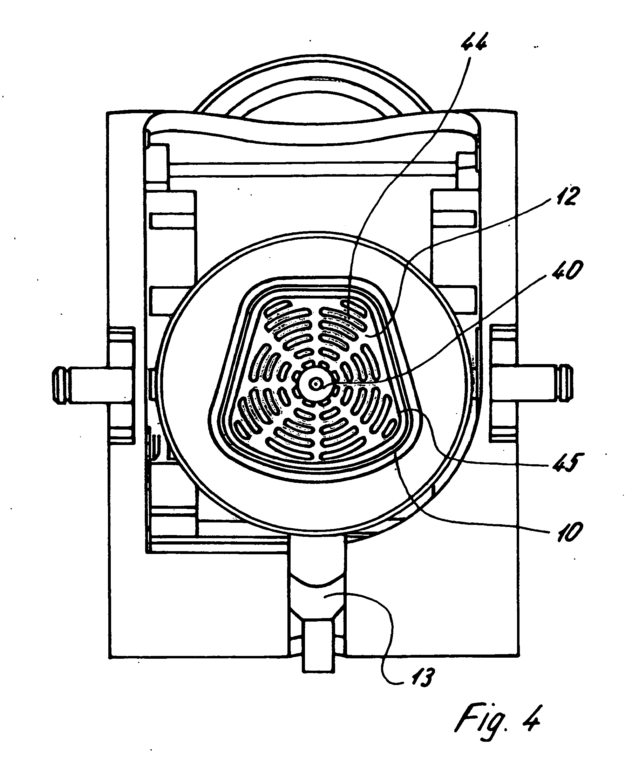

In Figur 4 ist der Boden 12 der Brühkammer 19 dargestellt. Die Rippen 44 sorgen für einen Abstand zwischen den Portionspackungen innerhalb der Brühkammer 19 und einer Bodenfläche, sodass das Fluid zu dem Abfluss 40 geführt werden kann. Randseitig ist der Boden 44 über eine Dichtung 45 abgedichtet.

Zum Brühen von Kaffee wird nach dem Befüllen der Brühkammer 19 mit ein oder mehreren Portionspackungen die Pumpe 5 betätigt, wodurch das Fluid durch die spiralförmigen Kanäle 7 gepumpt wird und sich über das geschlossene Entlastungsventil ein Druck innerhalb der Druckkammer 27 aufbaut, der für eine Bewegung des Dichtelementes 20 zu dem Gehäuse 10 und der Brühkammer 19 sorgt.

Dadurch werden zunächst die Dichtlippen 22 gegen den Flansch 21 des Gehäuses 10 gedrückt und im mittigen Bereich wird das Druckelement 28 gegen die Portionspackungen gedrückt. Nach Überschreiten eines gewissen Druckes öffnet sich das Ventil 31 und das erhitzte Fluid kann nun über die Düse 11 in die Brühkammer 19 einströmen. Fällt während des Brühvorganges das Kaffeepulver leicht zusammen, sorgt die flexible Dichtung 20 für eine Kompensierung, da das Dichtelement 20 zusammen mit dem Druckelement 28 leicht in die Brühkammer 19 hineinbewegt werden kann. Dadurch werden innerhalb der Brühkammer 19 Spalte vermieden, die für einen By-pass des erhitzten Wassers sorgen können. Nachdem das Kaffeepulver durchströmt wurde, kann der gebrühte Kaffee über den Abfluss 40 aus der Brühkammer 19 abfließen.

Bei dem in Figur 2 dargestellten Ausführungsbeispiel ist ein plattenförmiges Druckelement 28 vorgesehen, das im Wesentlichen die Form des Querschnittes der Brühkammer 19 besitzt. Es ist bei einer alternativen Ausführungsform auch möglich, statt des Druckelementes 28 das Dichtelement 20 direkt gegen die Portionspackungen zu drücken.

In Figur 1 ist ferner eine modifizierte Ausführungsform gezeigt, bei der die Düse 11' beweglich ausgebildet ist und über die Dichtung 20' in die Brühkammer 19 hineingedrückt werden kann. Die Düse 11' übernimmt somit die Funktion des Druckelementes 28 und der Düse 11, wobei dadurch das Druckelement 28 eingespart werden kann. Bei dieser Ausgestaltung ist das Volumen des Druckraumes 27 geringfügig erhöht.

Alternativ ist es auch möglich, die Düse 11 in eine Membrandichtung zu integrieren, die randseitig festgelegt ist. Die Düse 11 kann dabei über bekannte Klemmverbindungen abgedichtet an einer Öffnung der Membrandichtung gehalten sein. Auch dadurch kann die gewünschte Bewegung des Dichtelementes während des Brühvorganges erreicht werden.

Es ist auch möglich, die Bewegung des Dichtelementes 20 vollständig von der Wasserzufuhr für den Brühvorgang zu trennen. Das Dichtelement könnte für eine Bewegung auch mit kaltem Wasser oder einem anderen Fluid beaufschlagt werden.

## Patentansprüche

1. Brühvorrichtung für einen Kaffeeautomaten, insbesondere für den Haushaltsbereich, mit einem eine Brühkammer (19) umgebenden Gehäuse (10), an dessen einer Seite eine Brause (8, 9, 11) und einer gegenüberliegenden Seite ein Boden (12) mit einem Abfluss (40) für das gebrühte Fluid angeordnet ist, wobei zwischen Brause (8, 9, 11) und Gehäuse (10) ein Dichtelement (20) vorgesehen ist, wobei das Dichtelement (20) zu dem Gehäuse (10) und der Brühkammer (19) hin bewegbar an der Brause (8, 9, 11) gehalten ist, wobei das flexible Dichtelement (20) mit einer äußeren Dichtfläche (22) an dem Gehäuse (10) zur Abdichtung anlegbar ist und mit einem inneren elastischen Teil zu der Brühkammer (19) bewegbar ist, **dadurch gekennzeichnet, dass** das Dichtelement (20) an einem äußeren Abschnitt Dichtlippen (22) aufweist, die an einem radial nach außen hervorstehenden Flansch (21) des Gehäuses (10) anliegen und an einem inneren Abschnitt des Dichtelementes (20) eine weitere Dichtlippe (25) zur Ausbildung einer Dichtfläche vorgesehen ist, die an einem ringförmigen Abschnitt (26) des Halters (9) anliegt.

2. Brühvorrichtung nach Anspruch 1, **dadurch gekennzeichnet, dass** das Dichtelement (20) auf der der Brühkammer (19) abgewandten Seite mit Druck baufschlagbar ist.

3. Brühvorrichtung nach Anspruch 1 oder 2, **dadurch gekennzeichnet, dass** die Bewegung des Dichtelementes (20) hydraulisch erfolgt und eine Verbindung zwischen einer Zuleitung (30) für die Brause (8, 9, 11) und einem Druckraum (27) für das Dichtelement (20) besteht.

4. Brühvorrichtung nach Anspruch 3, **dadurch gekennzeichnet, dass** die Zuleitung (30) für die Brause (8, 9, 11) mit einem vorgespannten Ventil (31) verschlossen ist.

5. Brühvorrichtung nach einem der Ansprüche 1 bis 4, **dadurch gekennzeichnet, dass** an dem Dichtelement (10) ein Druckelement (28) angeordnet oder ausgebildet ist, das während des Brühvorganges mit einem Anpressdruck gegen ein in der Brühkammer (19) angeordnetes Extraktionsgut gehalten ist.

6. Brühvorrichtung nach einem der Ansprüche 1 bis 5, **dadurch gekennzeichnet, dass** in der Brühkammer (19) ein oder mehrere Portionspackungen mit Kaffee aufnehmbar sind, die mit einem Anpressdruck zwischen dem Boden (12) mit dem Abfluss (40) und einem an der gegenüberliegenden Seite angeordneten Druckelement (28) gehalten sind

7. Brühvorrichtung nach einem der Ansprüche 1 bis 6, **dadurch gekennzeichnet, dass** innerhalb des Dichtelementes (20) eine feststehende Düse (11) montiert ist, durch die ein Fluid in die Brühkammer (19) strömt.

8. Brühvorrichtung nach einem der Ansprüche 1 bis 7, **dadurch gekennzeichnet, dass** an dem Dichtelement (20) mindestens ein Zapfen (24) zur Ausrichtung des Druckelementes (28) angeformt ist.

9. Brühvorrichtung nach einem der Ansprüche 1 bis 8, **dadurch gekennzeichnet, dass** an dem Abfluss (40) der Brühkammer (19) ein vorgespanntes Verschlussventil (41) vorgesehen ist.

10. Brühvorrichtung nach einem der Ansprüche 1 bis 9, **dadurch gekennzeichnet, dass** das Dichtelement (20) eine an die Portionspackungen und den Querschnitt der Brühkammer (19) angepasste Kontur aufweist.

11. Brühvorrichtung nach einem der Ansprüche 1 bis 8, **dadurch gekennzeichnet, dass** die Fluidführung für den Brühvorgang und eine Fluidführung zum Bewegen des Dichtelementes (20) voneinander getrennt sind.

## Claims

1. Brewing apparatus for a coffee machine, in particular for domestic use, having a housing (10) which encloses a brewing chamber (19) and has a nozzle assembly (8, 9, 11) arranged on one side and a base (12) with an outflow (40) for the brewed fluid arranged on an opposite side, a sealing element (20) being provided between the nozzle assembly (8, 9, 11) and housing (10), the sealing element (20) being retained on the nozzle assembly (8, 9, 11) such that it can be moved in the direction of the housing (10) and of the brewing chamber (19) and it being possible for the flexible sealing element (20) to be positioned against the housing (10) for sealing purposes by way of an outer sealing surface (22) and to be moved in relation to the brewing chamber (19) by way of an inner elastic part, **characterized in that**, on an outer section, the sealing element (20) has sealing lips (22) which butt against a radially outwardly projecting flange (21) of the housing (10), and provided on an inner section of the sealing element (20) is a further sealing lip (25) for forming a sealing surface which butts against an annular section (26) of the holder (9).

2. Brewing apparatus according to Claim 1, **characterized in that** the sealing element (20) can be subjected to pressure on the side which is directed away from the brewing chamber (19).

3. Brewing apparatus according to Claim 1 or 2,
**characterized in that** the movement of the sealing element (20) takes place hydraulically, and there is a connection between a supply line (30) for the nozzle assembly (8, 9, 11) and a pressure chamber (27) for the sealing element (20).

4. Brewing apparatus according to Claim 3, **characterized in that** the supply line (30) for the nozzle assembly (8, 9, 11) is closed by a prestressed valve (31).

5. Brewing apparatus according to one of Claims 1 to 4, **characterized in that** arranged or formed on the sealing element (10) is a pressure-exerting element (28) which, during the brewing operation, is retained with a contact pressure against an extraction substance arranged in the brewing chamber (19).

6. Brewing apparatus according to one of Claims 1 to 5, **characterized in that** the brewing chamber (19) can accommodate one or more portion packs with coffee which are retained with a contact pressure between the base (12) with the outflow (40) and a pressure-exerting element (28) which is arranged on the opposite side.

7. Brewing apparatus according to one of Claims 1 to 6, **characterized in that** a fixed nozzle (11) is installed within the sealing element (20) through which a fluid flows into the brewing chamber (19).

8. Brewing apparatus according to one of Claims 1 to 7, **characterized in that** at least one pin (24) for aligning the pressure-exerting element (28) is integrally formed on the sealing element (20).

9. Brewing apparatus according to one of Claims 1 to 8, **characterized in that** a prestressed shut-off valve (41) is provided on the outflow (40) of the brewing chamber (19).

10. Brewing apparatus according to one of Claims 1 to 9, **characterized in that** the sealing element (20) has a contour which is adapted to the portion packs and the cross section of the brewing chamber (19).

11. Brewing apparatus according to one of Claims 1 to 8, **characterized in that** the fluid guide for the brewing operation and a fluid guide for moving the sealing element (20) are separate from one another.

## Revendications

1. Dispositif d'infusion pour une machine à café, notamment à usage domestique, avec un boîtier (10) entourant une chambre d'infusion (19), sur un côté duquel est disposé un dispositif d'arrosage (8, 9, 11) et sur un côté opposé un fond (12) avec une conduite de sortie (40) pour le fluide infusé, entre le dispositif d'arrosage (8, 9, 11) et le boîtier (10) étant prévu un élément d'étanchéité (20), l'élément d'étanchéité (20) étant maintenu sur le dispositif d'arrosage (8, 9, 11) de manière à pouvoir se déplacer vers le boîtier (10) et la chambre d'infusion (19), l'élément d'étanchéité (20) flexible par le biais d'une surface étanche externe (22) pouvant être appliqué contre le boîtier (10) à des fins d'étanchéité et pouvant être déplacé par le biais d'une partie élastique interne vers la chambre d'infusion (19), **caractérisé en ce que** l'élément d'étanchéité (20) présente sur une section externe des lèvres d'étanchéité (22) qui reposent sur une bride (21) du boîtier (10) dépassant radialement vers l'extérieur et sur une section interne de l'élément d'étanchéité (20) est prévue une autre lèvre d'étanchéité (25) en vue de la réalisation d'une surface étanche qui s'applique sur une section annulaire (26) du support (9).

2. Dispositif d'infusion selon la revendication 1, **caractérisé en ce que** l'élément d'étanchéité (20) peut être sollicité en pression sur le côté opposé à la chambre d'infusion (19).

3. Dispositif d'infusion selon la revendication 1 ou 2, **caractérisé en ce que** l'élément d'étanchéité (20) est déplacé hydrauliquement et une liaison est établie entre une conduite d'amenée (30) pour le dispositif d'arrosage (8, 9, 11) et une chambre de pression (27) pour l'élément d'étanchéité (20).

4. Dispositif d'infusion selon la revendication 3, **caractérisé en ce que** la conduite d'amenée (30) pour le dispositif d'arrosage (8, 9, 11) est fermée à l'aide d'un clapet (31) précontraint.

5. Dispositif d'infusion selon l'une des revendications 1 à 4, **caractérisé en ce qu'**un élément de pression (28) est disposé ou formé sur l'élément d'étanchéité (10), lequel est maintenu pendant le processus d'infusion à l'aide d'une pression d'application contre un produit d'extraction disposé dans la chambre d'infusion (19).

6. Dispositif d'infusion selon l'une des revendications 1 à 5, **caractérisé en ce que** dans la chambre d'infusion (19) peuvent être reçus un ou plusieurs emballages-doses de café qui sont maintenus à l'aide d'une pression d'application entre le fond (12) avec la conduite de sortie (40) et un élément de pression (28) disposé sur le côté opposé.

7. Dispositif d'infusion selon l'une des revendications 1 à 6, **caractérisé en ce qu'**au sein de l'élément d'étanchéité (20) est montée une buse (11) fixe, au travers de laquelle un fluide s'écoule dans la chambre d'infusion (19).

8. Dispositif d'infusion selon l'une des revendications 1 à 7, **caractérisé en ce qu'**au moins un tenon (24) est formé sur l'élément d'étanchéité (20) pour l'alignement de l'élément de pression (28).

9. Dispositif d'infusion selon l'une des revendications 1 à 8, **caractérisé en ce qu'**un clapet d'obturation (41) précontraint est prévu sur la conduite de sortie (40) de la chambre d'infusion (19).

10. Dispositif d'infusion selon l'une des revendications 1 à 9, **caractérisé en ce que** l'élément d'étanchéité (20) présente un contour adapté aux emballages-doses et à la section de la chambre d'infusion (19).

11. Dispositif d'infusion selon l'une des revendications 1 à 8, **caractérisé en ce que** le guidage du fluide pour le processus d'infusion et un guidage de fluide pour le déplacement de l'élément d'étanchéité (20) sont séparés l'un de l'autre.
